# EUROPEAN PATENT SPECIFICATION

(11) **EP 4 010 709 B1**
(45) Date of publication and mention of the grant of the patent: **17.06.2026**
(21) Application number: 20760682.3
(22) Date of filing: 05.08.2020
(51) Int. Cl.: G01N 35/10, G01N 33/536

(54) **METHODS FOR ONBOARD DILUTIONS USING AUTOMATED ANALYZER**
VERFAHREN FÜR ONBOARD-VERDÜNNUNGEN UNTER VERWENDUNG EINES AUTOMATISCHEN ANALYSATORS
PROCÉDÉS DE DILUTIONS EMBARQUÉES À L'AIDE D'UN ANALYSEUR AUTOMATISÉ

(30) Priority: 05.08.2019 US 201962883097 P
(43) Date of publication of application: 15.06.2022
(73) Proprietor: Beckman Coulter, Inc., Brea, CA 92822 (US)
(72) Inventor: MIZUTANI, Takayuki, Chaska, MN 55318 (US); TUBMAN, Jessica M., Chaska, MN 55318 (US)
(74) Representative: Müller-Boré & Partner Patentanwälte PartG mbB
(86) International application number: PCT/US2020/045048
(87) International publication number: WO 2021/026259

(56) References cited:
- EP-A2- 2 068 154
- SARANYA KITTANAKOM ET AL: "The importance of tumour marker dual reporting during method transition: PSA high-dose hook effect detected", CLINICAL BIOCHEMISTRY, vol. 61, 1 November 2018 (2018-11-01), US, CA, pages 45 - 46, XP055738102, ISSN: 0009-9120, DOI: 10.1016/j.clinbiochem.2018.08.011

## Description

### CLAIM OF PRIORITY

This patent application claims the benefit of priority to U.S. Application Serial No. 62/883,097, filed August 5, 2019.

### BACKGROUND

This disclosure relates to a method in accordance with claim 1, concerning performing automated dilution of a sample onboard an immunoassay diagnostic system.

Automated clinical analyzers are well known in the art and are generally used for the automated or semi-automated analysis of patient samples. Typically, prepared patient samples, such as blood, are placed onto such an analyzer in sample containers, such as test tubes. The analyzer pipettes a patient sample and one or more reagents into a reaction cell (e.g., a reaction vessel or cuvette) where an analysis of the sample is conducted, usually for a particular analyte of interest, and results of the analysis are reported. Instruments known as UniCel^{®} DxI 600 Access^{®} Immunoassay System (i.e., DxI 600) and UniCel^{®} DxI 800 Access^{®} Immunoassay System (i.e., DxI 800), manufactured by Beckman Coulter, Inc. of Brea, California, USA, are examples of such automated clinical analyzers.

Automated pipettors may be employed on such analyzers to transfer the patient samples, reagents, washing solutions, wash buffers, buffer solutions, substrates, and/or mixtures thereof as required for the analysis. A probe of the pipettor is, for example, lowered into a sample container that holds a sample, a predetermined volume of the sample is withdrawn from the sample container, and the probe is withdrawn from the sample container. The probe is moved, for example, to a position above a reaction cell, is again lowered, and the sample held in the probe is expelled into the reaction cell. Similar actions may be used to pipette and deliver one or more reagents and/or one or more substrates from reagent containers and/or substrate containers to the reaction cell, either with the same probe or with one or more reagent and/or substrate delivery probes.

Automated container handlers may be employed on such analyzers to transfer containers (e.g., empty containers, containers containing fluid, sample containers, reaction cells, reaction vessels, cuvettes, etc.) in to, within, and/or out of the analyzer. The automated pipettors may aspirate and/or dispense out of and/or in to such containers while the containers are held by the automated container handlers.

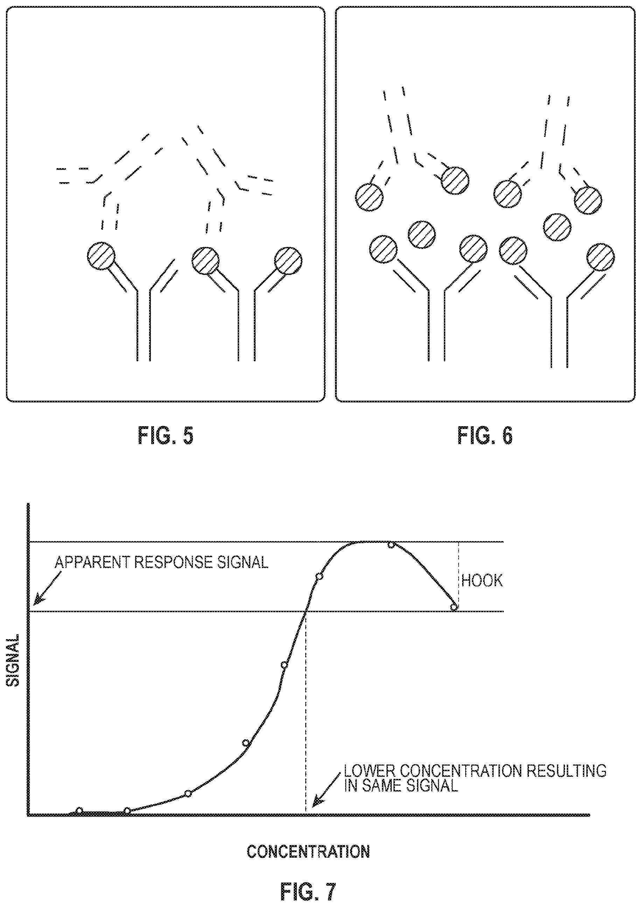

With certain tests, it may be desired to dilute the sample (e.g., a patient sample) prior to the analyzer performing the test. For example, if a prior test result indicates signal saturation or near saturation, another portion of the sample may be diluted, and the diluted sample may be tested by the analyzer. For another example, assays that are susceptible to a hook effect or prozone effect, known in the art, may run portions of the sample without dilution and with dilution to avoid reporting results with the hook effect or prozone effect. The hook effect or prozone effect may be manifested in the presence of an excess of free analyte where a disproportionate amount of conjugate binds directly to the free analyte. This results in less of the conjugate being available to bind to capture antibody analyte complexes. As less of the free conjugate is available to bind to the capture antibody analyte complex, an amount of label that is bound to the capture antibody analyte complex is reduced, thereby reducing the amount of analyte detected. Figure 7 shows an example of a curve illustrating the hook or prozone effect. As illustrated at Figure 7, at a higher range of analyte concentration, a lower indication of analyte concentration will be reported by the signal. This hook or prozone effect mechanism may cause false negative results to be indicated by the signal.

At least certain dilution procedures are not automated in current clinical analyzers known in the art. Instead, an operator of the clinical analyzer and/or other technician manually dilutes the sample into one or more diluted samples and re-runs the diluted samples on the clinical analyzer.

Thus, there is a need for methods of performing onboard dilutions and/or a series of onboard dilutions with an automated analyzer that overcomes the limitations of the prior art dilution approaches of prior art analyzers. The needed improvements include, but are not limited to, eliminating human errors in dilution processes by automating the dilution processes, reducing time to report results to physicians and/or patients by automating the dilution processes, and reducing costs of dilution processes by automating the dilution processes and thereby minimizing manual labor.

EP 2 068 154 A2 describes an automated analyzer with a sample pretreatment disk and a method of operating the sample pretreatment disk which are designed not to decrease the processing capability of the automated analyzer during sample pretreatments such as sample dispensing and diluent dispensing. The automated analyzer can be applied to any clinical assay involving biological sample analyses.

"Saranya Kittanakom ET AL: "The importance of tumour marker dual reporting during method transition: PSA high-dose hook effect detected", CLINICAL BIOCHEMISTRY, vol. 61, 1 November 2018 (2018-11-01), pages 45-46, XP055738102, US, CA, ISSN: 0009-9120, DOI: 10.1016/j.clinbiochem.2018.08.011." describes using the total prostate-specific antigen (PSA) as a tumour marker in the clinical management of prostate cancer to assess how aggressive a cancer is likely to be, in monitoring treatment, and to biochemically detect relapse/recurrence during follow-up.

### SUMMARY

The underlying technical problem is solved by the subject-matter according to independent claim 1. Additional embodiments are defined in the dependent claims. According to certain aspects of the present disclosure, a method of performing automated sample dilution onboard an analyzer, such as an immunoassay diagnostic system, includes: a) pipetting a first amount of patient sample from a primary sample vessel at a sample presentation unit to a sample vessel with a sample pipetting device; b) making a first patient sample dilution by pipetting a second amount of patient sample from the sample vessel to a first dilution vessel with the sample pipetting device and pipetting a first amount of diluent to the first dilution vessel with a reagent pipetting device; and c) storing the first dilution vessel at the sample storage unit.

In certain embodiments, the above method may further include pipetting a third amount of patient sample from the sample vessel to a first reaction vessel with the sample pipetting device.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### BRIEF DESCRIPTION OF THE DRAWINGS

Figure 1 is a schematic diagram illustrating an example automated instrument for analyzing biological specimens, according to the principles of the present disclosure;
Figure 2 is a schematic diagram illustrating an automated dilution process that is suitable for use in the example automated instrument of Figure 1, according to the principles of the present disclosure;
Figure 3 is a flow chart illustrating an example method of implementing the automated dilution process of Figure 2, according to the principles of the present disclosure;
Figure 4 is a time allocation chart illustrating a method of implementing the automated dilution process of Figure 2, according to the principles of the present disclosure;
Figure 5 is a schematic diagram illustrating a first assay process for immunological analysis that may be practiced in the example automated instrument of Figure 1;
Figure 6 is a schematic diagram illustrating a second assay process for immunological analysis that may be practiced in the example automated instrument of Figure 1;
Figure 7 is a graph illustrating a hook effect or prozone effect of assay processes such as the first and second assay processes of Figures 5 and 6;
Figure 8 is a schematic diagram illustrating a carriage set suitable for use in the example automated instrument of Figure 1, according to the principles of the present disclosure;
Figure 9 is a schematic diagram illustrating two carriages of the carriage set of Figure 8 and further illustrating a pipetting sequence suitable for use in the automated dilution process of Figure 2, according to the principles of the present disclosure; and

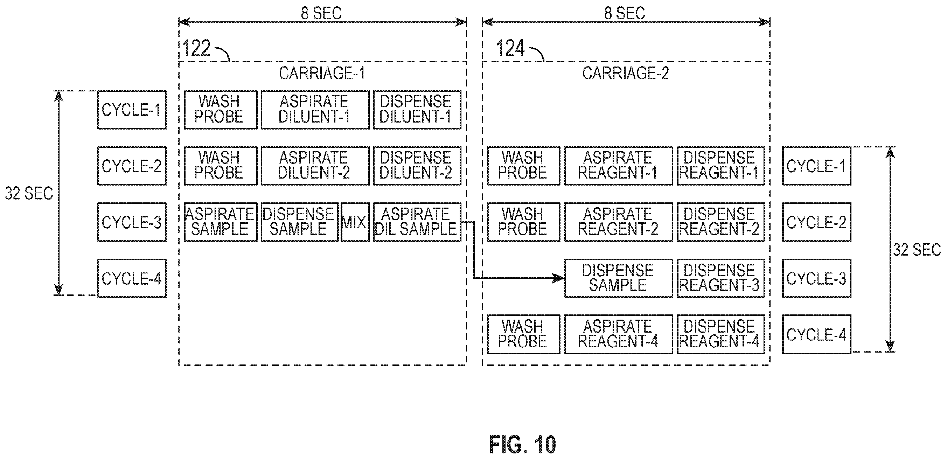

Figure 10 is a schematic timing chart illustrating a method of implementing the pipetting sequence of Figure 9, according to the principles of the present disclosure.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

According to the principles of the present disclosure, onboard sample dilutions and/or a series of onboard sample dilutions may be performed by an automated analyzer. In the figures and descriptions herein, automated dilutions performed by an automated immunoassay diagnostic system are illustrated. The automated immunoassay diagnostic system analyses patient samples (e.g., blood and/or components thereof). In other embodiments, other automated analyzers may perform automated dilutions. Thus, a variety of automated sample analysis systems with a variety of configurations are suitable for incorporating automated dilutions, as will be understood by one of ordinary skill in the art.

According to the principles of the present disclosure, components of an automated analyzer may be configured to perform automated sample dilutions and/or a series of automated sample dilutions onboard the automated analyzer. At least some of the components that perform the automated dilutions may be further configured to process and perform functions of the automated analyzer for executing the analysis of the sample. For example, one or more of the pipettors, carriages, sample storage devices, thermal systems, vessels, supply of disposable vessels, reusable vessels, pick-and-place devices, supply of disposable tips, supply of wash buffer, supply of reagents, etc. that are employed in executing the analysis of the sample may be further employed in performing automated sample dilutions and/or a series of automated sample dilutions onboard the automated analyzer.

According to the principles of the present disclosure, a single onboard automated sample dilution may be performed in conjunction with a routine test of the same, but undiluted, sample material or as a stand-alone test. After dilution, the diluted sample may be processed by the automated analyzer in the same manner as the undiluted sample material.

According to the principles of the present disclosure, a series of onboard automated sample dilutions may be performed in conjunction with a routine test of the same, but undiluted, sample material or as a series of onboard automated sample dilutions without a corresponding routine test of the undiluted sample material.

According to the principles of the present disclosure, methods for the series of onboard automated sample dilutions continue further automatically diluting previously diluted samples until a certain predetermined characteristic is observed in the corresponding test results. Further diluting samples and testing the diluted samples is continued until a linear response in the test results is observed. (When the test results of a diluted sample is reduced proportionate to the dilution ratio from the test results of the parent sample, a linear response is observed.)

According to the principles of the present disclosure, the automated sample dilutions and/or the series of automated sample dilutions onboard the automated analyzer and their corresponding tests should satisfy confirmatory tests, as specified in claim 1. For example, with a typical immunoassay reaction, two antibodies sandwich a target antigen to make a complex (see Figure 5). However, patients with chronic disease could have significant amounts of antigens, and if a number of antigens exceeds a number of a pair of antibodies in a reaction, at least some of the complexes cannot be formed (see Figure 6). This phenomenon is called a hook effect or prozone effect (see Figure 7) and, unless detected, may lead to false negative results. There are assays on which physicians rely on to make serious clinical decisions, and for those assays (e.g., blood virus assays) a confirmatory test(s) is needed before reporting positive/negative results.

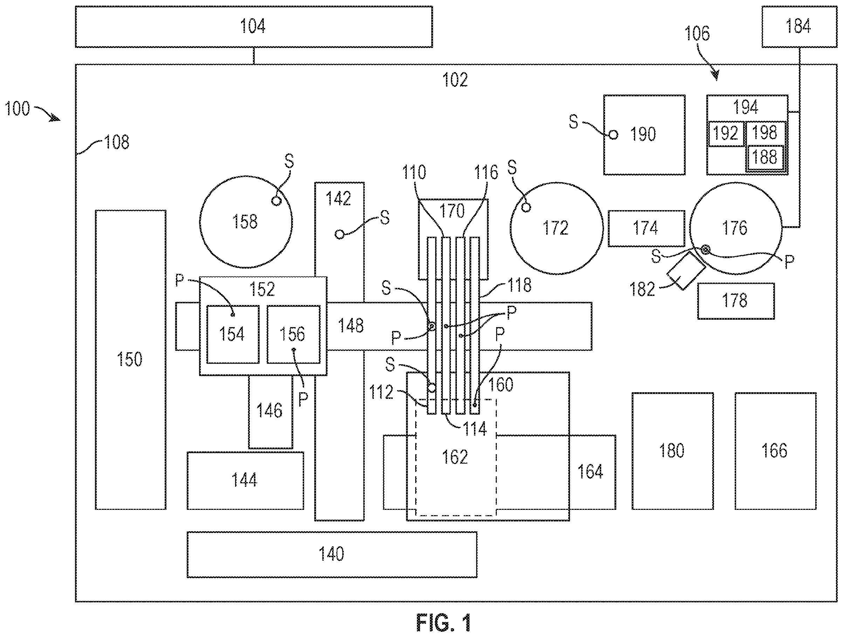

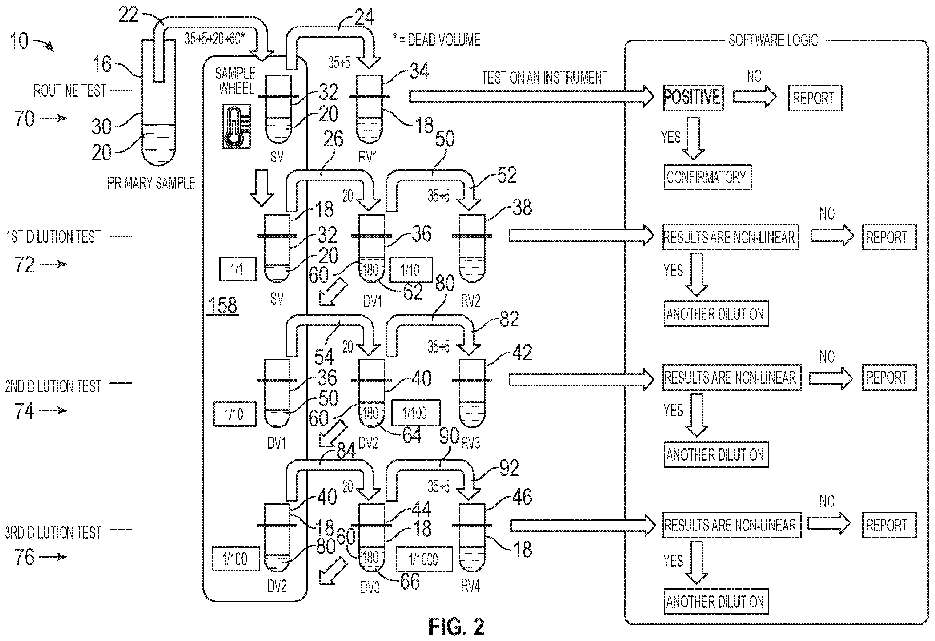

Turning now to Figure 1, a schematic diagram of an example instrument 100 (e.g., an immunoassay analyzer, a biological specimen analysis instrument, a sample analysis system, an immunoassay diagnostic system, an automated immunoassay diagnostic system, etc.) for analyzing a biological specimen is shown. In certain embodiments, the instrument 100 includes a substance preparation system 102, a preparation evaluation system 104, a substance evaluation system 106, and a frame 108 (e.g., a main frame). One or more containers 16, 18 (see Figure 2) are used with the systems of the instrument 100. As depicted, a primary sample container 16 introduces a patient sample 20 (i.e., the biological specimen) into the instrument 100. In certain embodiments, a standardized container 18 is used to move and/or contain fluids within the instrument 100. In certain embodiments, the standardized container 18 is disposable. In other embodiments, containers that are non-standardized and/or non-disposable may be used to move and/or contain fluids within the instrument 100.

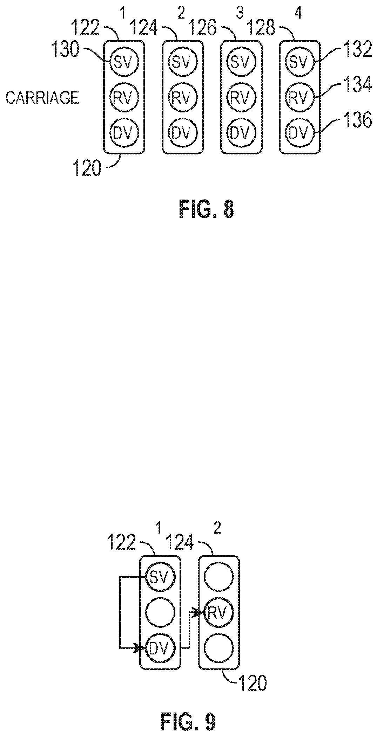

One or more container carriage devices 120, 146 (see Figures 1, 8, and 9) may be provided to move the standardized containers 18 from place to place within the instrument 100. As illustrated at Figure 8, four carriage devices 122, 124, 126, 128 are each configured to carry up to three of the standardized containers 18. As depicted, the four carriage devices 122, 124, 126, 128 are copies of a common carriage device 120. In the depicted embodiment, the carriage device 120 includes three vessel holders 130 that are each adapted to hold one of the standardized containers 18. In other embodiments, a similar carriage device may hold more than or fewer than three containers. As illustrated at Figures 8 and 9, each of the three vessel holders 130 may be designated to hold one of the standardized containers 18 for a given purpose. In particular, a first vessel holder 132 may be designated to hold one of the standardized containers 18 functioning as a sample vessel (SV). Likewise, a second vessel holder 134 may be designated to hold one of the standardized containers 18 functioning as a reaction vessel (RV). Likewise, a third vessel holder 136 may be designated to hold one of the standardized containers 18 functioning as a dilution vessel (DV).

As illustrated at Figure 1, the instrument 100 includes a sample/reagent transfer area 110. In the depicted embodiment, the sample/reagent transfer area 110 includes four sample/reagent transfer lanes 112, 114, 116, 118. Each of the sample/reagent transfer lanes 112, 114, 116, 118 corresponds to one of the four carriage devices 122, 124, 126, 128 (see Figure 8). In particular, the carriage device 122 moves along the sample/reagent transfer lane 112; the carriage device 124 moves along the sample/reagent transfer lane 114; the carriage device 126 moves along the sample/reagent transfer lane 116; and, the carriage device 128 moves along the sample/reagent transfer lane 118. Each of the four carriage devices 122, 124, 126, 128 may move independently from the others. However, as illustrated at Figure 9 and described in detail below, the carriage devices 122, 124, 126, 128 may move in coordination with each other.

A reagent pipetting device 162 may include four pipettors corresponding to the four sample/reagent transfer lanes 112, 114, 116, 118. The four pipettors of the reagent pipetting device 162 may move independently from each other along the corresponding one of the sample/reagent transfer lanes 112, 114, 116, 118. Each of the four pipettors of the reagent pipetting device 162 further corresponds to the one of the four carriage devices 122, 124, 126, 128 corresponding to the same transfer lane 112, 114, 116, 118. Each of the four pipettors of the reagent pipetting device 162 is configured to dispense into a container(s) 18 held by its corresponding carriage device 122, 124, 126, 128.

As illustrated at Figure 1, a sample transfer unit 148 intersects each of the four sample/reagent transfer lanes 112, 114, 116, 118 and further intersects a sample presentation unit 142. The sample transfer unit 148 includes a sample pipetting device 152 that includes a sample aliquot pipetting unit 154 and a sample precise pipetting unit 156. The sample aliquot pipetting unit 154 and the sample precise pipetting unit 156 move parallel to each other and perpendicular to the four sample/reagent transfer lanes 112, 114, 116, 118 and further move perpendicular to a travel direction of the sample presentation unit 142.

In certain embodiments, the example instrument 100 includes a computer 194 (i.e., a controller). The computer 194 may include memory 198 (e.g., non-transitory computer readable medium). The memory 198 may have data 188 stored thereon. The data 188 may include software, and various information, as is known in the art of such instruments. In certain embodiments, the data may include one or more assay protocol files (APFs) 184. In certain embodiments, one or more assay protocol files (APFs) 184 may be stored externally from the instrument 100 and may be accessed by the computer 194 (e.g., via a network). In certain embodiments, the computer 194 may include an evaluation processing device 192. In certain embodiments, the computer 194 may include a plurality of distributed computing devices and/or controllers.

In the illustrated example, the instrument 100 is configured as an immunoassay analyzer. In certain embodiments, the substance preparation system 102 includes a sample supply board 140, the sample presentation unit 142, a vessel feeder 144, the vessel carriage unit 146, the sample transfer unit 148, a pipetting tip feeder 150, the sample pipetting device 152, the sample aliquot pipetting unit 154, the sample precise pipetting unit 156, a sample storage unit 158 (i.e., a sample wheel), a reagent carriage unit 160, the reagent pipetting device 162, a reagent storage device 164, a reagent load device 166, a reaction vessel transfer unit 170 (e.g., an incubator transfer unit), an incubator 172, a reaction vessel transfer unit 174, a wash unit 176 (i.e., a wash wheel, a reaction wash unit, an assay wash area, an assay wash unit, etc.), a substrate pipetting device 178, a substrate load device 180, and a camera unit 182. In certain embodiments, the substance evaluation system 106 includes a light measurement device 190 and/or the evaluation processing device 192.

The sample presentation unit 142, the sample transfer unit 148, the sample wheel 158, the reaction vessel transfer unit 170, the incubator 172, the reaction vessel transfer unit 174, and the wash unit 176 may each include at least one carrier for transporting at least one sample vessel 220, 320 (e.g., a cuvette) between at least two stations S. In certain embodiments, the sample presentation unit 142 transfers one or more of the primary sample container(s) 16 from the sample supply board 140 into the instrument 100 and thereby makes the patient sample 20 available for pipetting into one or more of the standardized container(s) 18.

Certain embodiments of the substance evaluation system 106 are further associated with at least some operations performed by the reaction vessel transfer unit 170, the incubator 172, the reaction vessel transfer unit 174, the wash unit 176, and/or the substrate load device 180.

The frame 108 may provide a connecting structure that may hold some or all of the various systems and/or sub-systems of the instrument 100 with respect to each other. The frame 108 may further provide an interface (e.g., feet) to support the instrument 100 and to connect the instrument 100 to its operating environment (e.g., a lab, a building, etc.).

Certain systems of the example instrument 100 include probe(s) P to process various liquids that include samples, specimens, reagents, chemicals, agents, rinses, particles, substrates, enzymes, unreacted substances, whole blood, serum, plasma, other blood components or fractions, immune complexes, urine, biological fluids, etc. (see Figure 1). Such systems may include the sample pipetting device 152, the sample aliquot pipetting unit 154 (i.e., the sample aliquot gantry), the sample precise pipetting unit 156 (i.e., the sample precision gantry), the reagent pipetting device 162, the wash unit 176 (i.e., the wash wheel), and the substrate pipetting device 178.

For example, the sample aliquot pipetting unit 154 operates to pipette an aliquot of sample 20 from a sample tube 16 located in the sample presentation unit 142 and dispense the aliquot of sample 20 into a sample vessel (SV) 18 in the vessel holder 132 of one of the transfer carriages 120 with a probe P. For another example, the sample precise pipetting unit 156 operates to pipette the sample 20 from a sample vessel (SV) 18 located in the vessel holder 132 of one of the transfer carriages 120 of the reagent carriage unit 160 with a probe P. Then, the sample precise pipetting unit 156 can dispense the sample 20 to a reaction vessel (RV) 18 located in the vessel holder 134 of one of the transfer carriages 120 of the reagent carriage unit 160 with the probe P. In certain embodiments, the sample 20 can be dispensed to a dilution vessel (DV) 18 with a probe P to create a sample dilution 50 (for example, with buffer solution 62 provided with a probe P by the reagent pipetting device 162). For still another example, the substrate pipetting device 178 operates to dispense a substrate to a washed reaction vessel (RV) 18 in the wash unit 176 with a probe P. One example of the substrate is a chemiluminescent substrate for immunoassay enzyme reaction, such as *Lumi-Phos 530,* which can produce light and thereby provide detection corresponding to a quantity of analytes captured on magnetic particles. Another example of the substrate includes those with features and/or characteristics described at WO 2018/006059 A1, titled Chemiluminescent Substrates, published 04 January 2018.

Turning now to Figure 2, a schematic diagram of a dilution process 10 that is suitable for use with the example instrument 100 is illustrated, according to the principles of the present disclosure. As depicted, the dilution process 10 may begin upon the completion of a routine test 70. In certain embodiments, preparations for one or more dilutions may begin immediately and/or before the routine test 70 has completed and/or before results from the routine test 70 are available. In other embodiments, a routine test 70 may not be conducted, and instead the dilution process 10 may begin with dilution preparation.

In the dilution process 10, that may or may not include the routine test 70, an amount of sample 20 (e.g., an amount of patient sample) may be introduced to the instrument 100 via a primary sample vessel 30. The primary sample container 16 may be used as the primary sample vessel 30. The primary sample vessel 30 may be held by a rack that may further hold additional sample vessels. The rack, and thereby the primary sample vessel 30, may be transported by the sample presentation unit 142 (see Figure 1). The sample aliquot pipetting unit 154 may transfer a portion 22 (up to 100%) of the amount of sample 20 from the primary sample vessel 30, located at the sample presentation unit 142, to a sample vessel (SV) 32, located at the vessel holder 132 of one of the container carriage devices 120 at one of the sample/reagent transfer lanes 112, 114, 116, 118. The standardized container 18 may be used as the sample vessel (SV) 32.

If the routine test 70 is conducted, then the sample precise pipetting unit 156 (i.e., the sample pipetting unit) transfers a portion 24 of sample 20 from the sample vessel (SV) 32, located at the vessel holder 132, to a reaction vessel (RV) 34, located at the vessel holder 134 of one of the container carriage devices 120 at one of the sample/reagent transfer lanes 112, 114, 116, 118. The standardized container 18 may be used as the reaction vessel (RV) 34. At least the portion 24 of sample 20 is then tested by the instrument 100. The sample vessel (SV) 32 may be stored at the sample storage unit 158 before the transfer of the portion 24 of sample 20, after the transfer of the portion 24 of sample 20, while at least the portion 24 of sample 20 is tested by the instrument 100, and/or after at least the portion 24 of sample 20 is tested by the instrument 100.

If there is an indication of a first dilution test 72 of the sample 20 being needed, then a dilution of the sample 20 is prepared. The indication for the first dilution test 72 may result from a certain test result from the routine test 70, from a predetermination that no routine test 70 will be performed but instead an initial diluted test will be performed, or from a predetermination that a routine test 70 will be performed in addition to at least one diluted test 72. The dilution of the sample 20 is prepared by moving the sample vessel (SV) 32 to the vessel holder 132, if needed (i.e., if not already there). The dilution of the sample 20 is further prepared by pipetting an amount 62 of diluent 60 to a dilution vessel (DV) 36 with the reagent pipetting device 162. The dilution vessel (DV) 36 may be located at the vessel holder 136 of one of the container carriage devices 120 at one of the sample/reagent transfer lanes 112, 114, 116, 118. The standardized container 18 may be used as the dilution vessel (DV) 36. The dilution of the sample 20 is further prepared by pipetting an amount 26 of patient sample 20 from the sample vessel (SV) 32 to the dilution vessel (DV) 36 with the sample precise pipetting unit 156 and thereby forming a sample dilution 50 within the dilution vessel (DV) 36. The sample dilution 50 may be mixed within the dilution vessel (DV) 36.

To prepare the sample dilution 50 for testing by the instrument 100, the sample precise pipetting unit 156 transfers a portion 52 of the sample dilution 50 from the dilution vessel (DV) 36, located at the vessel holder 136, to a reaction vessel (RV) 38, located at the vessel holder 134 of one of the container carriage devices 120 at one of the sample/reagent transfer lanes 112, 114, 116, 118. The standardized container 18 may be used as the reaction vessel (RV) 38. At least the portion 52 of the sample dilution 50 is then tested by the instrument 100. The dilution vessel (DV) 36 may be stored at the sample storage unit 158 before the transfer of the portion 52 of the sample dilution 50, after the transfer of the portion 52 of the sample dilution 50, while at least the portion 52 of the sample dilution 50 is tested by the instrument 100, and/or after at least the portion 52 of the sample dilution 50 is tested by the instrument 100.

If there is an indication of a dilution test 74 of the sample dilution 50 (i.e., a second dilution test 74 of the sample 20) being needed, then a dilution of the sample dilution 50 is prepared. The indication for the dilution test 74 may result from a certain test result from the dilution test 72, from a predetermination that a routine test 70 and a dilution test 72 will be performed in addition to the dilution test 74, etc. The dilution of the sample dilution 50 is prepared by moving the dilution vessel (DV) 36 to the vessel holder 136, if needed (i.e., if not already there). The dilution of the sample dilution 50 is further prepared by pipetting an amount 64 of diluent 60 to a dilution vessel (DV) 40 with the reagent pipetting device 162. The dilution vessel (DV) 40 may be located at the vessel holder 136 of one of the container carriage devices 120 at one of the sample/reagent transfer lanes 112, 114, 116, 118. The standardized container 18 may be used as the dilution vessel (DV) 40. The dilution of the sample dilution 50 is further prepared by pipetting an amount 54 of the sample dilution 50 from the dilution vessel (DV) 36 to the dilution vessel (DV) 40 with the sample precise pipetting unit 156 and thereby forming a sample dilution 80 within the dilution vessel (DV) 40. The sample dilution 80 may be mixed within the dilution vessel (DV) 40.

To prepare the sample dilution 80 for testing by the instrument 100, the sample precise pipetting unit 156 transfers a portion 82 of the sample dilution 80 from the dilution vessel (DV) 40, located at the vessel holder 136, to a reaction vessel (RV) 42, located at the vessel holder 134 of one of the container carriage devices 120 at one of the sample/reagent transfer lanes 112, 114, 116, 118. The standardized container 18 may be used as the reaction vessel (RV) 42. At least the portion 82 of the sample dilution 80 is then tested by the instrument 100. The dilution vessel (DV) 40 may be stored at the sample storage unit 158 before the transfer of the portion 82 of the sample dilution 80, after the transfer of the portion 82 of the sample dilution 80, while at least the portion 82 of the sample dilution 80 is tested by the instrument 100, and/or after at least the portion 82 of the sample dilution 80 is tested by the instrument 1 00.

If there is an indication of a dilution test 76 of the sample dilution 80 (i.e., a third dilution test 76 of the sample 20) being needed, then a dilution of the sample dilution 80 is prepared. The indication for the dilution test 76 may result from a certain test result from the dilution test 74, from a predetermination that a routine test 70, a dilution test 72, and a dilution test 74 will be performed in addition to the dilution test 76, etc. The dilution of the sample dilution 80 is prepared by moving the dilution vessel (DV) 40 to the vessel holder 136, if needed (i.e., if not already there). The dilution of the sample dilution 80 is further prepared by pipetting an amount 66 of diluent 60 to a dilution vessel (DV) 44 with the reagent pipetting device 162. The dilution vessel (DV) 44 may be located at the vessel holder 136 of one of the container carriage devices 120 at one of the sample/reagent transfer lanes 112, 114, 116, 118. The standardized container 18 may be used as the dilution vessel (DV) 44. The dilution of the sample dilution 80 is further prepared by pipetting an amount 84 of the sample dilution 80 from the dilution vessel (DV) 40 to the dilution vessel (DV) 44 with the sample precise pipetting unit 156 and thereby forming a sample dilution 90 within the dilution vessel (DV) 44. The sample dilution 90 may be mixed within the dilution vessel (DV) 44.

To prepare the sample dilution 90 for testing by the instrument 100, the sample precise pipetting unit 156 transfers a portion 92 of the sample dilution 90 from the dilution vessel (DV) 44, located at the vessel holder 136, to a reaction vessel (RV) 46, located at the vessel holder 134 of one of the container carriage devices 120 at one of the sample/reagent transfer lanes 112, 114, 116, 118. The standardized container 18 may be used as the reaction vessel (RV) 46. At least the portion 92 of the sample dilution 90 is then tested by the instrument 100. The dilution vessel (DV) 44 may be stored at the sample storage unit 158 before the transfer of the portion 92 of the sample dilution 90, after the transfer of the portion 92 of the sample dilution 90, while at least the portion 92 of the sample dilution 90 is tested by the instrument 100, and/or after at least the portion 92 of the sample dilution 90 is tested by the instrument 100.

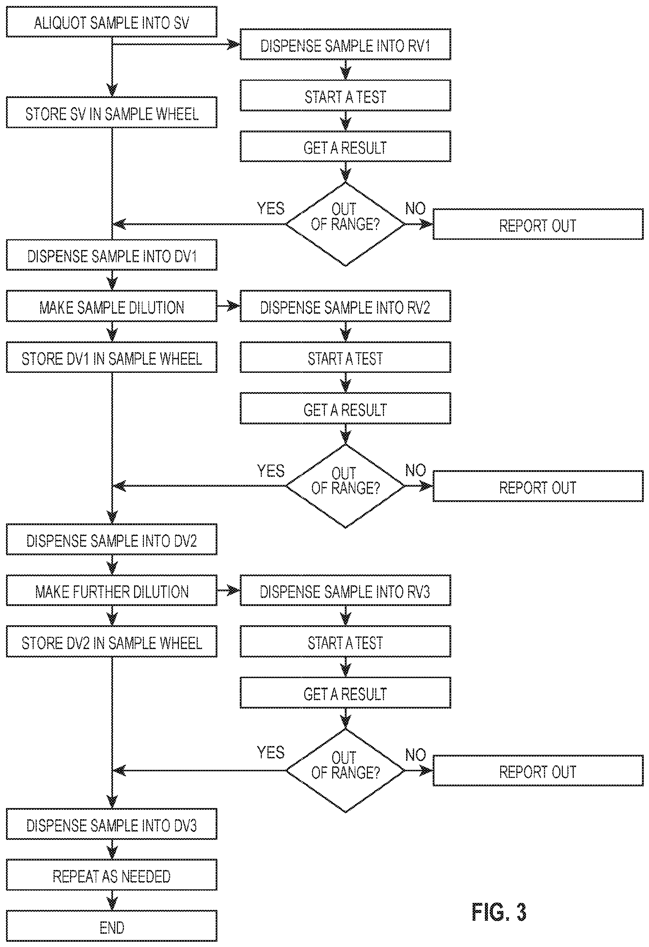

Turning now to Figure 3, a flow chart for an example method of using the dilution process 10 is illustrated, according to the principles of the present disclosure.

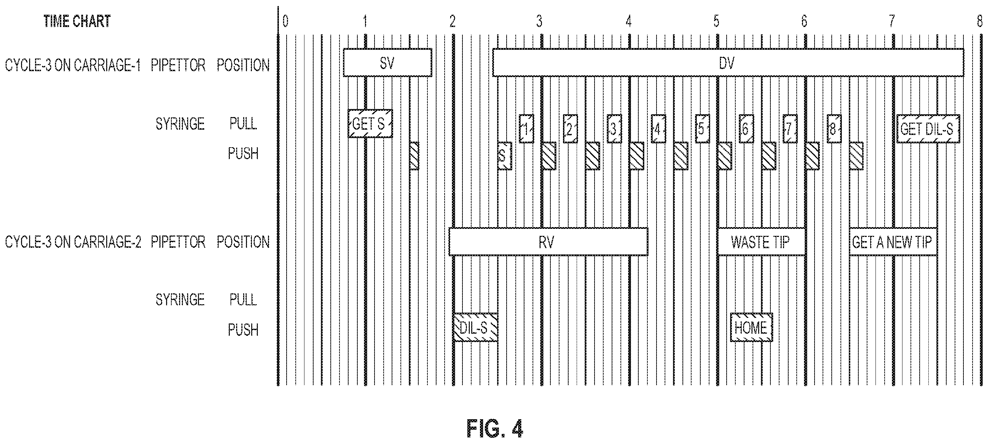

Turning now to Figure 4, a time allocation chart for a method of using the dilution process 10 is illustrated, according to the principles of the present disclosure. In the example embodiment, the instrument 100 operates on a predetermined cycle time (e.g., 8 seconds).

Turning now to Figures 5 and 6, a schematic diagram that illustrates an example method 200 (i.e., an assay, a sandwich assay, an assay type, etc.) for immunological analysis using the example instrument 100 is illustrated.

Turning now to Figure 7, a graph illustrating a hook effect or prozone effect of assay processes, such as the assay processes of Figures 5 and 6, is shown.

The various features of the various embodiments may be combined in various combinations with each other and thereby yield further embodiments according to the principles of the present disclosure.

## Claims

1. A method of performing automated sample dilution (10) onboard an immunoassay diagnostic system (100), the method comprising:
providing the immunoassay diagnostic system (100), the immunoassay diagnostic system (100) including:
a sample storage unit (158);
at least one pipetting device (152, 162); and
a sample presentation unit (142);
pipetting a first amount (22, 26, 54, 84) of sample (20, 50, 80) that includes at least some patient sample (20) from a first vessel (30, 32, 36, 40) to a second vessel (32, 36, 40, **44)** with the pipetting device (152, 162);
testing the sample (20, 50, 80);
diluting or further diluting the sample (20, 50, 80) by:
pipetting an amount (26, 54, 84) of sample (20, 50, 80) from the second vessel (32, 36, 40, 44) to a dilution vessel (36, 40, 44) with the pipetting device (152, 162); and
pipetting an amount (62, 64, 66) of diluent (60) to the dilution vessel (36, 40, **44)** with the pipetting device (152, 162);
testing the diluted sample;
further diluting previously diluted samples and testing the diluted samples until a linear response in the test results is observed, wherein the linear response is observed when the test results of the diluted sample is reduced proportionate to a dilution ratio from the test results of the sample (20, 50, 80); and
determining whether to perform a subsequent dilution based on a result of the linear response in the test results.

2. The method of claim 1, wherein the linear response in the test results is determined by a measurement by a light measurement device (190);
wherein, optionally, the linear response in the test results is indicated if output from the light measurement device (190) is proportionate to the dilution ratio of the sample;
wherein, optionally, further diluting is performed if the output from the light measurement device (190) is not proportionate to the dilution ratio of the sample.

3. The method of claim 1, wherein the immunoassay diagnostic system (100) further includes a reagent pipetting device (162); and
wherein the method further comprises storing the dilution vessel (36, 40, 44) at the sample storage unit (158).

4. The method of any one of claims 1 to 3, wherein the sample storage unit (158) includes a sample wheel; and/or
wherein the sample storage unit (158) is cooled; and/or
wherein the sample pipetting device (152) includes a sample aliquot pipetting unit (154);
wherein, optionally, the sample aliquot pipetting unit (154) pipettes the first amount (22) of patient sample (20) from the first vessel (30, 32, 36, 40) to the second vessel (32, 36, 40, 44); and/or
wherein the sample pipetting device (152) includes a sample pipetting unit (156).

5. The method of any of claims 1-4, further comprising pipetting an amount (24) of patient sample (20) from the second vessel (32, 36, 40, 44) to a first reaction vessel (34) with the sample pipetting device (152).

6. The method of claim 5, wherein pipetting the amount (24) of patient sample (20) from the second vessel (32, 36, 40, 44) to the first reaction vessel (34) with the sample pipetting device (152) occurs before pipetting the amount (26) of patient sample (20) from the second vessel (32, 36, 40, 44) to the dilution vessel (36, 40, 44) with the sample pipetting device (152).

7. The method of any of claims 1-6, wherein the second vessel (32, 36, 40, 44) is at a carriage unit (120) at least when pipetting the first amount (22) of patient sample (20) to the second vessel (32, 36, 40, 44); and/or
wherein the second vessel (32, 36, 40, 44) is at a carriage unit (120) at least when pipetting the amount (26) of patient sample (20) from the second vessel (32, 36, 40, 44).

8. The method of any of claims 1-7, further comprising pipetting a first amount (52) of the diluted sample (50) from the dilution vessel (36) to a second reaction vessel (38) with the sample pipetting device (152).

9. The method of any of claims 1-8, further comprising pipetting a second amount (54) of the diluted sample (50) from the dilution vessel (36) to a second dilution vessel (40) with the sample pipetting device (152);
optionally, further comprising pipetting a second amount (64) of diluent (60) to the second dilution vessel (40) with the reagent pipetting device (162).

10. The method of any of claims 1-9, further comprising making a second patient sample dilution (80) by:
pipetting a second amount (54) of the diluted sample (50) from the dilution vessel (36) to a second dilution vessel (40) with the sample pipetting device (152); and
pipetting a second amount (64) of diluent (60) to the second dilution vessel (40) with the reagent pipetting device (162).

11. The method of claim 10, further comprising storing the second dilution vessel (40) at the sample storage unit (158).

12. The method of claims 10 or 11, further comprising pipetting a first amount (82) of the second patient sample dilution (80) from the second dilution vessel (40) to a third reaction vessel (42) with the sample pipetting device (152).

13. The method of claim 12, further comprising pipetting a second amount (84) of the second patient sample dilution (80) from the second dilution vessel (40) to a third dilution vessel (44) with the sample pipetting device (152).

14. The method of claim 13, further comprising pipetting a third amount (66) of diluent (60) to the third dilution vessel (44) with the reagent pipetting device (162).

15. The method of claims 10 or 11, further comprising making a third patient sample dilution (90) by:
pipetting a second amount (84) of the second patient sample dilution (80) from the second dilution vessel (40) to a third dilution vessel (44) with the sample pipetting device (152); and
pipetting a third amount (66) of diluent (60) to the third dilution vessel (44) with the reagent pipetting device (162);
optionally, further comprising storing the third dilution vessel (44) at the sample storage unit (158); and/or
further comprising pipetting a first amount (92) of the third patient sample dilution (90) from the third dilution vessel (44) to a fourth reaction vessel (46) with the sample pipetting device (152).

## Patentansprüche

1. Verfahren zum Durchführen einer automatischen Probenverdünnung (10) an Bord eines Immuntest-Diagnosesystems (100), wobei das Verfahren umfasst:
Bereitstellen eines Immuntest-Diagnosesystems (100), wobei das Immuntest-Diagnosesystem (100) Folgendes einschließt:
eine Probenaufbewahrungseinheit (158);
mindestens eine Pipettiervorrichtung (152, 162); und
eine Probenpräsentiereinheit (142);
Pipettieren einer ersten Menge (22, 26, 54, 84) einer Probe (20, 50, 80), die mindestens etwas Patientenprobe (20) einschließt, von einem ersten Behälter (30, 32, 36, 40) in einen zweiten Behälter (32, 36, 40, 44) mit der Pipettiervorrichtung (152, 162);
Testen der Probe (20, 50, 80);
Verdünnen oder weiteres Verdünnen der Probe (20, 50, 80) durch:
Pipettieren einer Menge (26, 54, 84) einer Probe (20, 50, 80) vom zweiten Behälter (32, 36, 40, 44) in einen Verdünnungsbehälter (36, 40, 44) mit der Pipettiervorrichtung (152, 162); und
Pipettieren einer Menge (62, 64, 66) eines Verdünnungsmittels (60) in den Verdünnungsbehälter (36, 40, 44) mit der Pipettiervorrichtung (152, 162);
Testen der verdünnten Probe;
weiteres Verdünnen von zuvor verdünnten Proben und Testen der verdünnten Proben, bis eine lineare Reaktion in den Testergebnissen beobachtet wird, wobei die lineare Reaktion beobachtet wird, wenn die Testergebnisse der verdünnten Probe proportional zu einem Verdünnungsverhältnis aus den Testergebnissen der Probe (20, 50, 80) verringert werden; und
Bestimmen, ob eine anschließende Verdünnung durchzuführen ist, auf der Grundlage eines Ergebnisses der linearen Reaktion in den Testergebnissen.

2. Verfahren nach Anspruch 1, wobei die lineare Reaktion in den Testergebnissen durch eine Messung durch eine Lichtmessvorrichtung (190) bestimmt wird;
wobei die lineare Reaktion in den Testergebnissen wahlweise angegeben wird, wenn eine Ausgabe aus der Lichtmessvorrichtung (190) proportional zum Verdünnungsverhältnis der Probe ist;
wobei wahlweise ein weiteres Verdünnen durchgeführt wird, wenn die Ausgabe aus der Lichtmessvorrichtung (190) nicht proportional zum Verdünnungsverhältnis der Probe ist.

3. Verfahren nach Anspruch 1, wobei das Immuntest-Diagnosesystem (100) weiter eine Reagenzienpipettierungsvorrichtung (162) einschließt; und
wobei das Verfahren weiter das Aufbewahren des Verdünnungsbehälters (36, 40, 44) in der Probenaufbewahrungseinheit (158) umfasst.

4. Verfahren nach einem der Ansprüche 1 bis 3, wobei die Probenaufbewahrungseinheit (158) ein Probenrad einschließt; und/oder
wobei die Probenaufbewahrungseinheit (158) gekühlt wird; und/oder
wobei die Probenpipettierungsvorrichtung (152) eine Probenaliquotenpipettierungseinheit (154) einschließt;
wobei die Probenaliquotenpipettierungseinheit (154) wahlweise die erste Menge (22) einer Patientenprobe (20) aus dem ersten Behälter (30, 32, 36, 40) in den zweiten Behälter (32, 36, 40, 44) pipettiert; und/oder
wobei die Probenpipettierungsvorrichtung (152) eine Probenpipettierungseinheit (156) einschließt.

5. Verfahren nach einem der Ansprüche 1-4, weiter umfassend das Pipettieren einer Menge (24) einer Patientenprobe (20) aus dem zweiten Behälter (32, 36, 40, 44) in einen ersten Reaktionsbehälter (34) mit der Probenpipettierungsvorrichtung (152).

6. Verfahren nach Anspruch 5, wobei das Pipettieren der Menge (24) einer Patientenprobe (20) aus dem zweiten Behälter (32, 36, 40, 44) in den ersten Reaktionsbehälter (34) mit der Probenpipettierungsvorrichtung (152) vor Pipettieren der Menge (26) einer Patientenprobe (20) aus dem zweiten Behälter (32, 36, 40, 44) in den Verdünnungsbehälter (36, 40, 44) mit der Probenpipettierungsvorrichtung (152) erfolgt.

7. Verfahren nach einem der Ansprüche 1-6, wobei der zweite Behälter (32, 36, 40, 44) zumindest beim Pipettieren der ersten Menge (22) einer Patientenprobe (20) in den zweiten Behälter (32, 36, 40, 44) in einer Schlitteneinheit (120) gelegen ist; und/oder
wobei der zweite Behälter (32, 36, 40, 44) zumindest beim Pipettieren der Menge (26) einer Patientenprobe (20) aus dem zweiten Behälter (32, 36, 40, 44) in einer Schlitteneinheit (120) gelegen ist.

8. Verfahren nach einem der Ansprüche 1-7, weiter umfassend das Pipettieren einer ersten Menge (52) der verdünnten Probe (50) aus dem Verdünnungsbehälter (36) in einen zweiten Reaktionsbehälter (38) mit der Probenpipettierungsvorrichtung (152).

9. Verfahren nach einem der Ansprüche 1 bis 8, weiter umfassend das Pipettieren einer zweiten Menge (54) der verdünnten Probe (50) aus dem Verdünnungsbehälter (36) in einen zweiten Verdünnungsbehälter (40) mit der Probenpipettierungsvorrichtung (152);
wahlweise weiter umfassend das Pipettieren einer zweiten Menge (64) eines Verdünnungsmittels (60) in den zweiten Verdünnungsbehälter (40) mit der Reagenzienpipettierungsvorrichtung (162).

10. Verfahren nach einem der Ansprüche 1-9, weiter umfassend das Herstellen einer zweiten Patientenprobenverdünnung (80) durch:
Pipettieren einer zweiten Menge (54) der verdünnten Probe (50) aus dem Verdünnungsbehälter (36) in einen zweiten Verdünnungsbehälter (40) mit der Probenpipettierungsvorrichtung (152); und
Pipettieren einer zweiten Menge (64) eines Verdünnungsmittels (60) in den zweiten Verdünnungsbehälter (40) mit der Reagenzienpipettierungsvorrichtung (162).

11. Verfahren nach Anspruch 10, weiter umfassend das Aufbewahren des zweiten Verdünnungsbehälters (40) in der Probenaufbewahrungseinheit (158).

12. Verfahren nach Ansprüchen 10 oder 11, weiter umfassend Pipettieren einer ersten Menge (82) der zweiten Patientenprobenverdünnung (80) aus dem zweiten Verdünnungsbehälter (40) in einen dritten Reaktionsbehälter (42) mit der Probenpipettierungsvorrichtung (152).

13. Verfahren nach Anspruch 12, weiter umfassend das Pipettieren einer zweiten Menge (84) der zweiten Patientenprobenverdünnung (80) aus dem zweiten Verdünnungsbehälter (40) in einen dritten Verdünnungsbehälter (44) mit der Probenpipettierungsvorrichtung (152).

14. Verfahren nach Anspruch 13, weiter umfassend das Pipettieren einer dritten Menge (66) eines Verdünnungsmittels (60) in den dritten Verdünnungsbehälter (44) mit der Reagenzienpipettierungsvorrichtung (162).

15. Verfahren nach Ansprüchen 10 oder 11, weiter umfassend das Herstellen einer dritten Patientenprobenverdünnung (90) durch:
Pipettieren einer zweiten Menge (84) der zweiten Patientenprobenverdünnung (80) aus dem zweiten Verdünnungsbehälter (40) in einen dritten Verdünnungsbehälter (44) mit der Probenpipettierungsvorrichtung (152); und
Pipettieren einer dritten Menge (66) eines Verdünnungsmittels (60) in den dritten Verdünnungsbehälter (44) mit der Reagenzienpipettierungsvorrichtung (162);
wahlweise weiter umfassend das Aufbewahren des dritten Verdünnungsbehälters (44) in der Probenaufbewahrungseinheit (158); und/oder
weiter umfassend das Pipettieren einer ersten Menge (92) der dritten Patientenprobenverdünnung (90) aus dem dritten Verdünnungsbehälter (44) in einen vierten Reaktionsbehälter (46) mit der Probenpipettierungsvorrichtung (152).

## Revendications

1. Procédé d'exécution d'une dilution d'échantillon automatisée (10) embarquée sur un système de diagnostic par dosage immunologique (100), le procédé comprenant :
la fourniture du système de diagnostic par dosage immunologique (100), le système de diagnostic par dosage immunologique (100) incluant :
une unité de stockage d'échantillon (158) ;
au moins un dispositif de prélèvement à la pipette (152, 162) ; et
une unité de présentation d'échantillon (142) ;
le prélèvement à la pipette d'une première quantité (22, 26, 54, 84) d'échantillon (20, 50, 80) qui inclut au moins une partie d'échantillon de patient (20) depuis un premier récipient (30, 32, 36, 40) vers un deuxième récipient (32, 36, 40, 44) à l'aide du dispositif de prélèvement à la pipette (152, 162) ;
le test de l'échantillon (20, 50, 80) ;
la dilution ou la dilution supplémentaire de l'échantillon (20, 50, 80) en :
prélevant à la pipette une quantité (26, 54, 84) d'échantillon (20, 50, 80) depuis le deuxième récipient (32, 36, 40, 44) vers un récipient de dilution (36, 40, 44) à l'aide du dispositif de prélèvement à la pipette (152, 162) ; et
prélevant à la pipette une quantité (62, 64, 66) de diluant (60) vers le récipient de dilution (36, 40, 44) à l'aide du dispositif de prélèvement à la pipette (152, 162) ;
le test de l'échantillon dilué ;
la dilution supplémentaire d'échantillons précédemment dilués et le test des échantillons dilués jusqu'à ce qu'une réponse linéaire dans les résultats de test soit observée, dans lequel la réponse linéaire est observée lorsque les résultats de test de l'échantillon dilué sont réduits proportionnellement à un rapport de dilution par rapport aux résultats de test de l'échantillon (20, 50, 80) ; et
le fait de déterminer s'il faut réaliser une dilution ultérieure sur la base d'un résultat de la réponse linéaire dans les résultats de test.

2. Procédé selon la revendication 1, dans lequel la réponse linéaire dans les résultats de test est déterminée par une mesure par un dispositif de mesure de lumière (190) ;
dans lequel, facultativement, la réponse linéaire dans les résultats de test est indiquée si ce qui est délivré en sortie par le dispositif de mesure de lumière (190) est proportionnel au rapport de dilution de l'échantillon ;
dans lequel, facultativement, une dilution supplémentaire est effectuée si ce qui est délivré en sortie par le dispositif de mesure de lumière (190) n'est pas proportionnel au rapport de dilution de l'échantillon.

3. Procédé selon la revendication 1, dans lequel le système de diagnostic par dosage immunologique (100) inclut en outre un dispositif de prélèvement de réactif à la pipette (162) ; et
dans lequel le procédé comprend en outre le stockage du récipient de dilution (36, 40, 44) au niveau de l'unité de stockage d'échantillon (158).

4. Procédé selon l'une quelconque des revendications 1 à 3, dans lequel l'unité de stockage d'échantillon (158) inclut une roue d'échantillons ; et/ou
dans lequel l'unité de stockage d'échantillon (158) est refroidie ; et/ou
dans lequel le dispositif de prélèvement d'échantillon à la pipette (152) inclut une unité de prélèvement d'aliquote d'échantillon à la pipette (154) ;
dans lequel, facultativement, l'unité de prélèvement d'aliquote d'échantillon à la pipette (154) prélève à la pipette la première quantité (22) d'échantillon de patient (20) depuis le premier récipient (30, 32, 36, 40) vers le deuxième récipient (32, 36, 40, 44) ; et/ou
dans lequel le dispositif de prélèvement d'échantillon à la pipette (152) inclut une unité de prélèvement d'échantillon à la pipette (156).

5. Procédé selon l'une quelconque des revendications 1 à 4, comprenant en outre le prélèvement à la pipette d'une quantité (24) d'échantillon de patient (20) depuis le deuxième récipient (32, 36, 40, 44) vers un premier récipient de réaction (34) à l'aide du dispositif de prélèvement d'échantillon à la pipette (152).

6. Procédé selon la revendication 5, dans lequel le prélèvement à la pipette de la quantité (24) d'échantillon de patient (20) depuis le deuxième récipient (32, 36, 40, 44) vers le premier récipient de réaction (34) à l'aide du dispositif de prélèvement d'échantillon à la pipette (152) a lieu avant le prélèvement à la pipette de la quantité (26) d'échantillon de patient (20) depuis le deuxième récipient (32, 36, 40, 44) vers le récipient de dilution (36, 40, 44) à l'aide du dispositif de prélèvement d'échantillon à la pipette (152).

7. Procédé selon l'une quelconque des revendications 1 à 6, dans lequel le deuxième récipient (32, 36, 40, 44) se situe au niveau d'une unité de chariot (120) au moins lors du prélèvement à la pipette de la première quantité (22) d'échantillon de patient (20) vers le deuxième récipient (32, 36, 40, 44) ; et/ou
dans lequel le deuxième récipient (32, 36, 40, 44) se situe au niveau d'une unité de chariot (120) au moins lors du prélèvement à la pipette de la quantité (26) d'échantillon de patient (20) depuis le deuxième récipient (32, 36, 40, 44).

8. Procédé selon l'une quelconque des revendications 1 à 7, comprenant en outre le prélèvement à la pipette d'une première quantité (52) de l'échantillon dilué (50) depuis le récipient de dilution (36) vers un deuxième récipient de réaction (38) à l'aide du dispositif de prélèvement d'échantillon à la pipette (152).

9. Procédé selon l'une quelconque des revendications 1 à 8, comprenant en outre le prélèvement à la pipette d'une deuxième quantité (54) de l'échantillon dilué (50) depuis le récipient de dilution (36) vers un deuxième récipient de dilution (40) à l'aide du dispositif de prélèvement d'échantillon à la pipette (152) ;
facultativement, comprenant en outre le prélèvement à la pipette d'une deuxième quantité (64) de diluant (60) vers le deuxième récipient de dilution (40) à l'aide du dispositif de prélèvement de réactif à la pipette (162).

10. Procédé selon l'une quelconque des revendications 1 à 9, comprenant en outre la réalisation d'une deuxième dilution d'échantillon de patient (80) en :
prélevant à la pipette une deuxième quantité (54) de l'échantillon dilué (50) depuis le récipient de dilution (36) vers un deuxième récipient de dilution (40) à l'aide du dispositif de prélèvement d'échantillon à la pipette (152) ; et
prélevant à la pipette une deuxième quantité (64) de diluant (60) vers le deuxième récipient de dilution (40) à l'aide du dispositif de prélèvement de réactif à la pipette (162).

11. Procédé selon la revendication 10, comprenant en outre le stockage du deuxième récipient de dilution (40) au niveau de l'unité de stockage d'échantillon (158).

12. Procédé selon la revendication 10 ou revendication 11, comprenant en outre le prélèvement à la pipette d'une première quantité (82) de la deuxième dilution d'échantillon de patient (80) depuis le deuxième récipient de dilution (40) vers un troisième récipient de réaction (42) à l'aide du dispositif de prélèvement d'échantillon à la pipette (152).

13. Procédé selon la revendication 12, comprenant en outre le prélèvement à la pipette d'une deuxième quantité (84) de la deuxième dilution d'échantillon de patient (80) depuis le deuxième récipient de dilution (40) vers un troisième récipient de dilution (44) à l'aide du dispositif de prélèvement d'échantillon à la pipette (152).

14. Procédé selon la revendication 13, comprenant en outre le prélèvement à la pipette d'une troisième quantité (66) de diluant (60) vers le troisième récipient de dilution (44) à l'aide du dispositif de prélèvement de réactif à la pipette (162).

15. Procédé selon la revendication 10 ou revendication 11, comprenant en outre la réalisation d'une troisième dilution d'échantillon de patient (90) en :
prélevant à la pipette une deuxième quantité (84) de la deuxième dilution d'échantillon de patient (80) depuis le deuxième récipient de dilution (40) vers un troisième récipient de dilution (44) à l'aide du dispositif de prélèvement d'échantillon à la pipette (152) ; et
prélevant à la pipette une troisième quantité (66) de diluant (60) vers le troisième récipient de dilution (44) à l'aide du dispositif de prélèvement de réactif à la pipette (162) ;
facultativement, comprenant en outre le stockage du troisième récipient de dilution (44) au niveau de l'unité de stockage d'échantillon (158) ; et/ou
comprenant en outre le prélèvement à la pipette d'une première quantité (92) de la troisième dilution d'échantillon de patient (90) depuis le troisième récipient de dilution (44) vers un quatrième récipient de réaction (46) à l'aide du dispositif de prélèvement d'échantillon à la pipette (152).
